# EUROPEAN PATENT APPLICATION

(11) **EP 4 271 068 A1**
(43) Date of publication of application: **01.11.2023**
(21) Application number: 23169407.6
(22) Date of filing: 24.04.2023
(51) Int. Cl.: H04W 64/00, H04W 76/27, H04W 88/08, H04W 92/12

(54) **SUPPORT FOR POSITIONING-MEASUREMENT-CONFIGURATION-TRANSFER IN RRC INACTIVE IN A DISAGGREGATED NEXT GENERATION RADIO ACCESS NETWORK (NG-RAN) NODE**

(30) Priority: 25.04.2022 US 202263334534 P
(71) Applicant: Intel Corporation, Santa Clara, CA 95054 (US)
(72) Inventor: MARTINEZ TARRADELL, Marta, Hillsboro, 97124 (US); HAN, Jaemin, Portland, 97229 (US); PALAT, Sudeep, Cheltenham, GLS GL51 0GG (GB); GUO, Yi, Shanghai, 201801 (CN)
(74) Representative: Viering, Jentschura & Partner mbB Patent- und Rechtsanwälte

(57) **Abstract**

An apparatus of a Distributed Unit, DU, configured for operation in a fifth generation, 5G, network, the apparatus may include: processing circuitry; a control-plane interface configured by the processing circuitry to carry control signalling; and a user-plane interface configured by the processing circuitry to carry traffic data, wherein the processing circuitry is configured to: identify (501) a configuration for INACTIVE positioning measurement; and provide (502) the configuration to a Centralized Unit, CU.

## Description

### Technical Field

Aspects of this disclosure may include various embodiments that may generally relate to the field of wireless communications.

### Background

Mobile communication has evolved significantly from early voice systems to today's highly sophisticated integrated communication platform. The next generation wireless communication system, 5G, or new radio (NR), and developing wireless mobile communication technologies may provide access to information and sharing of data by various users and applications.

### Brief Summary of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
Figure 1 illustrates an exemplary SuspendConfig information and SRS-PosRRC-InactiveConfig information;
Figure 2 illustrates a network in accordance with various embodiments;
Figure 3 schematically illustrates a wireless network in accordance with various embodiments;
Figure 4 is a block diagram illustrating components;
Figure 5 illustrates an exemplary process;
Figure 6 illustrates an exemplary process.

### Detailed Description

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).The word "exemplary" is used herein to mean "serving as an example, instance, or illustration". Any aspect or design described herein as "exemplary" is not necessarily to be construed as preferred or advantageous over other aspects or designs.

This disclosure is related to RAN3. RAN3 refers to Radio Access Network (RAN) Working Group 3, that is a technical working group within the 3rd Generation Partnership Project (3GPP), being responsible for the overall UTRAN/E-UTRAN/NG-RAN architecture and the specification of protocols for the related network interfaces within the context of the 3GPP mobile communication standard. UTRAN stands for Universal Terrestrial Radio Access Network and is the RAN technology used in the 3G mobile communication standard known as Universal Mobile Telecommunications System (UMTS). E-UTRAN stands for Evolved Universal Terrestrial Radio Access Network and is the RAN technology used in the 4G mobile communication standard known as Long-Term Evolution (LTE). NG-RAN stands for Next-Generation Radio Access Network and is the RAN technology used in the 5G mobile communication standard known as 5G New Radio (5G NR).

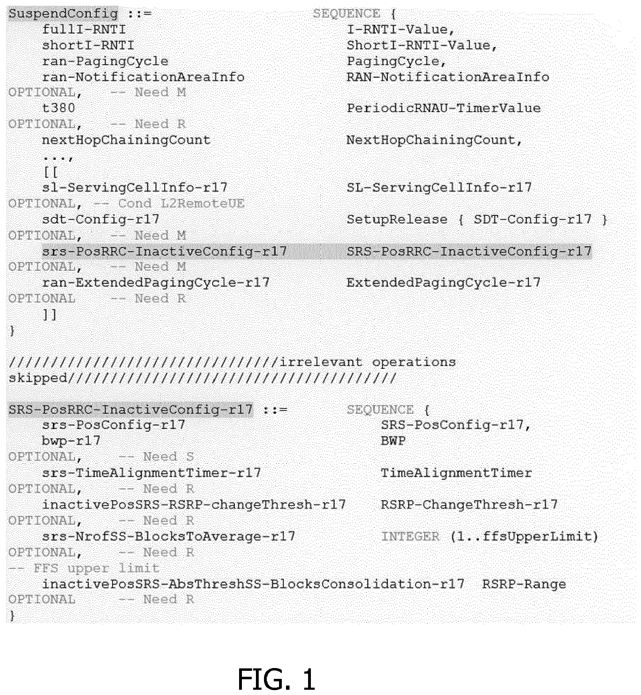

Figure 1 illustrates an exemplary SuspendConfig information and SRS-PosRRC-InactiveConfig information. Rel-17 NR Positioning Work Item (WI) [1] has enhanced positioning measurement accuracy and latency as well as defined mechanisms for positioning measurements while the User Equipment (UE) is in INACTIVE state. For INACTIVE support, Network (NW) can configure the UE with the SRS-PosRRC-InactiveConfig-r17 as part of the suspend configuration when sending RRCRelease message [2]:

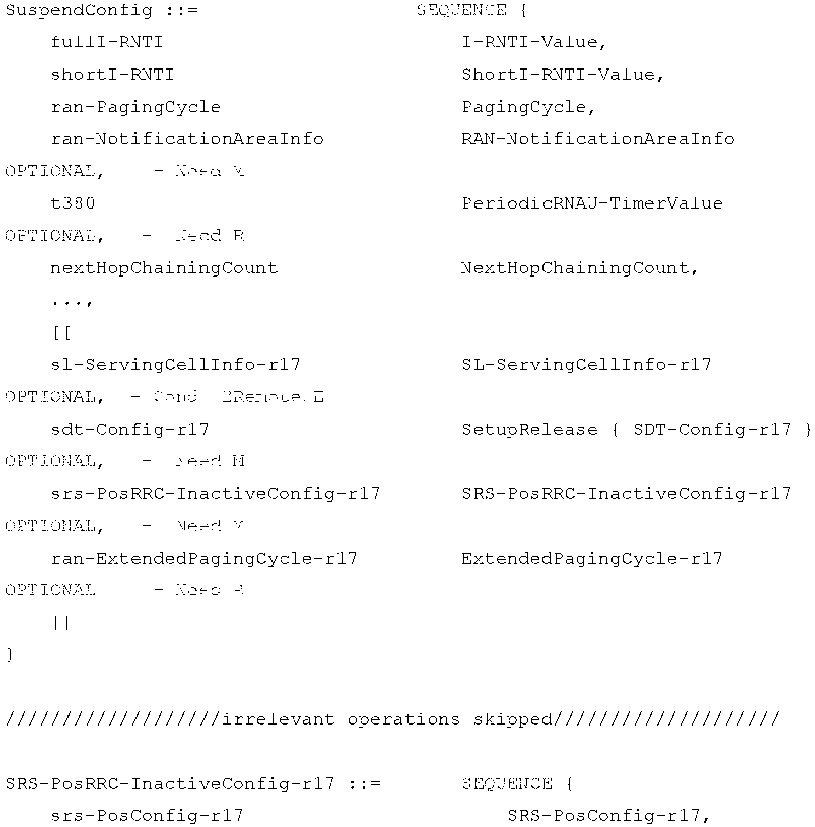

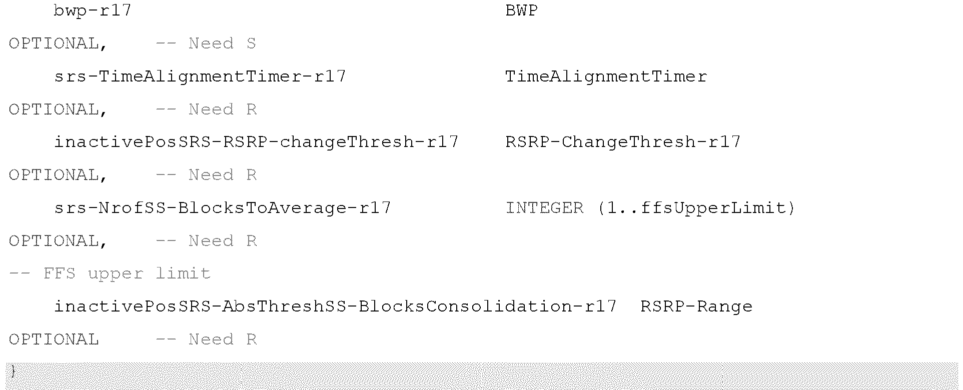

The [1] being RP-202900, "New WID on NR Positioning Enhancements", Intel Corporation, CATT (The latest WID is in RP-210903). and [2] being TS 38.331, NR; Radio Resource Control (RRC) protocol specification (Release 17).

In case of a disaggregated NG-RAN node split into a centralized unit (i.e. gNB-CU, a.k.a. CU) and a distributed unit (i.e. gNB-DU, a.k.a DU), the suspend configuration for INACTIVE for a UE is putting into RRCRelease message by CU. However, all the five subfields within SRS-PosRRC-InactiveConfig-r17 are under the responsibility of DU where DU should generate for a UE and supply to CU to be configured to the UE by RRCRelease message. In the legacy specification, no such transport over F1AP [3] from DU to CU is available. [3] being TS 38.473, NG-RAN; F1 application protocol (F1AP) (Release 17).

Various aspects provided in the present disclosure relates to various enhancements to make positioning measurement during INACTIVE (that was developed in Rel-17) work flawlessly in a disaggregated NG-RAN node, for example:
i) Mechanisms for DU to transport the configuration for INACTIVE positioning measurements over F 1AP, to be complied by CU and sent to the UE via RRCRelease message.
ii) Mechanisms for CU to query the configuration for INACTIVE positioning measurements from DU over F1AP, before CU decides to move the UE into INACTIVE state.

The described signaling and information in this disclosure, via associated aspects, may enable positioning INACTIVE measurement configuration for a UE in a disaggregated NG-RAN node. The ideas described in this disclosure may relate to 3GPP F1AP TS 38.473 (i.e. application protocol specification over F1 interface between CU and DU in a disaggregated NG-RAN node).

Some aspects may include (e.g. Embodiment 1): Mechanisms for DU to transport the configuration for INACTIVE positioning measurements over F1AP, to be complied by CU and sent to the UE via RRCRelease message.

From DU who is responsible for all the sub-fields of SRS-PosRRC-InactiveConfig-r17 (INACTIVE positioning measurement configuration), one possible implementation could be to enhance the existing DU to CU RRC Information information element (IE) in F1AP to transport such configuration to CU. The DU to CU RRC Information IE has been used as a way to transport UE-specific RRC IE or container from DU to be used by CU for compiling RRC messages. The IE has been included in the UE context management related procedures to serve the purpose. The SRS-PosRRC-InactiveConfig-r17 is for a specific UE that should be coming from DU and to be included by CU into RRCRelease message, so enhancing the DU to CU RRC Information IE and adding the corresponding RRC IE container looks reasonable and straightforward (the suggested change is represented in the table below as the row including IE/Group Name with SRS-PosRRC-InactiveConfig).

### 9.3.1.26 DU to CU RRC Information

This IE contains the RRC Information that are sent from the gNB-DU to the gNB-CU.

| **IE/Group Name** | **Presenc e** | **Range** | **IE type and reference** | **Semantics description** | **Criticality** | **Assigned Criticality** |
|---|---|---|---|---|---|---|
| CellGroupConfig | M | | OCTET STRING | CellGroupConfig, as defined in TS 38.331 [8]. | | |
| //////////////////////////////////////////////////////////////irelevant operations skipped///////////////////////////////////////////////////////////////////// | | | | | | |
| SDT-MACPHY-Config | ○ | | OCTET STRING | SDT-MACPHY-Config, as defined in TS 38.331 [8]. | YES | ignore |
| MUSIM-GapConfig | ○ | | OCTET STRING | MUSIM-GapConfig as defined in TS 38.331 [8]. | YES | ignore |
| SRS-PosRRC-InactiveConfig | ○ | | OCTET STRING | SRS-PosRRC-InactiveConfig as defined in TS 38.331 [8] | YES | ignore |

Alternatively, such configuration transport from DU to CU can be implemented in a UE-associated signaling message sent from DU to CU through a dedicated IE. For example, the UL RRC Message Transfer procedure can be enhanced to carry such configuration.

Some aspects may include (e.g. Embodiment 2): Mechanisms for CU to query the configuration for INACTIVE positioning measurements from DU over F1AP, before CU decides to move the UE into INACTIVE state.

One possible implementation could be to re-use the existing UE Context Modification procedure initiated by CU, which has already served the similar purpose of retrieving contributions generated by DU. For example, for Rel-17 Small Data Transmission WI, the similar RRC configuration for a UE to be configured when released to the INACTIVE state and generated by DU, i.e. SDT-MAC-PHY-CG-Config-r17, a new CG-SDT Query Indication IE has been defined in the UE CONTEXT MODIFICATION REQUEST message to enable CU to retrieve SDT-MAC-PHY-CG-Config-r17 from DU. Following similarly, one can define the similar query indication IE into the UE CONTEXT MODIFICATION REQUEST message so that CU can retrieve the configuration for INACTIVE positioning measurements (i.e. SRS-PosRRC-InactiveConfig-r17 or all the sub fields within generated by DU) from DU:

### 9.2.2.7 UE CONTEXT MODIFICATION REQUEST

This message is sent by the gNB-CU to provide UE Context information changes to the gNB-DU.

### Direction: gNB-CU → gNB-DU

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1 | | YES | reject |
| gNB-CU UE F1AP ID | M | | 9.3.1.4 | | YES | reject |
| gNB-DU UE F1AP ID | M | | 9.3.1.5 | | YES | reject |
| /////////////////////////////////////////////////////////////irelevant operations skipped///////////////////////////////////////////////////////////////////// | | | | | | |
| CG-SDT Query Indication | ○ | | ENUMERA TED (true, ...) | | YES | ignore |
| //////////////////////////////////////////////////////////////irrelevant operations skipped///////////////////////////////////////////////////////////////////// | | | | | | |
| gNB-DU UE Slice Maximum Bit Rate List | ○ | | 9.3.1.271 | The Slice Maximum Bit Rate List is the maximum aggregate UL bit rate per slice, to be enforced by the gNB-DU, if feasible. | YES | ignore |
| Positioning INACTIVE Query Indication | ○ | | ENUMERA TED (true, ...) | | YES | ignore |

//////////////////////////irrelevant operations skipped////////////////////////////

### 8.3.4 UE Context Modification (gNB-CU initiated)

/ / / / / / / / / / / / / / / / / / / / / / / / / /irrel evant operations skipped////////////////////////////

### 8.3.4.2 Successful Operation

If the *Positioning INACTIVE Query Indication* IE is included in the UE CONTEXT MODIFICATION REQUEST message and set to 'true', the gNB-DU shall, if supported, provide the SRS positioning related configuration in the *SRS-PosRRC-InactiveConfig* IE within the *DU to CU RRC Information* IE contained in the UE CONTEXT MODIFICATION RESPONSE message to the gNB-CU.
//////////////////////////irrelevant operations skipped////////////////////////////

Alternatively, such query indication from CU can be implemented in a CU-initiated and UE-associated class-1 signaling procedure through a dedicated IE. For example, the UE Context Setup procedure can be enhanced to include such query indication to retrieve the configuration for INACTIVE positioning measurements (i.e. SRS-PosRRC-InactiveConfig-r17 or all the sub fields within generated by DU) from DU.

### SYSTEMS AND IMPLEMENTATIONS

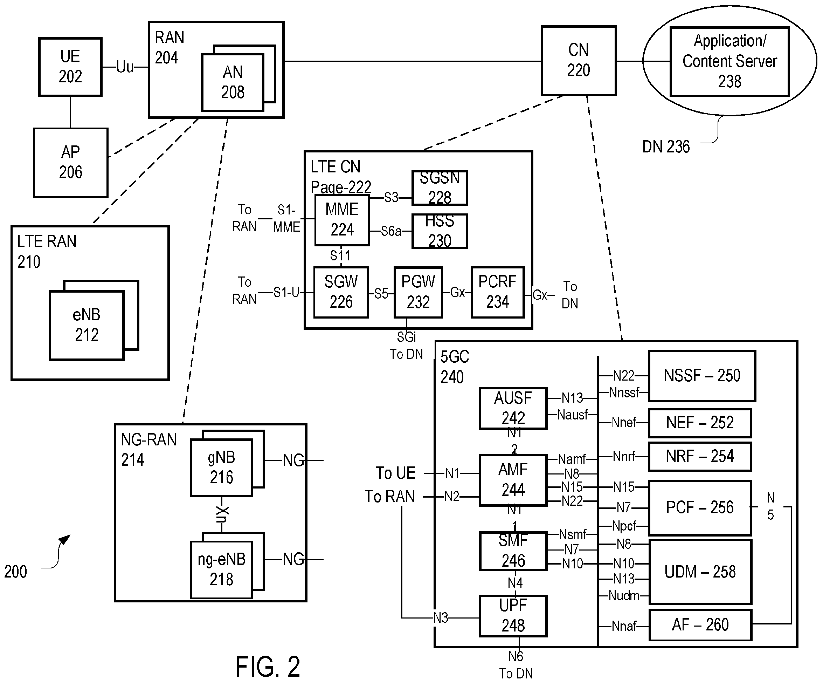

Figures 2-4 illustrate various systems, devices, and components that may implement aspects provided in this disclosure (e.g. of disclosed embodiments).

Figure 2 illustrates a network 200 in accordance with various embodiments. The network 200 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 200 may include a UE 202, which may include any mobile or non-mobile computing device designed to communicate with a RAN 204 via an over-the-air connection. The UE 202 may be communicatively coupled with the RAN 204 by a Uu interface. The UE 202 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 200 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 202 may additionally communicate with an AP 206 via an over-the-air connection. The AP 206 may manage a WLAN connection, which may serve to offload some/all network traffic from the RAN 204. The connection between the UE 202 and the AP 206 may be consistent with any IEEE 802.11 protocol, wherein the AP 206 could be a wireless fidelity (Wi-Fi^{®}) router. In some embodiments, the UE 202, RAN 204, and AP 206 may utilize cellular-WLAN aggregation (for example, LWA/LWIP). Cellular-WLAN aggregation may involve the UE 202 being configured by the RAN 204 to utilize both cellular radio resources and WLAN resources.

The RAN 204 may include one or more access nodes, for example, AN 208. AN 208 may terminate air-interface protocols for the UE 202 by providing access stratum protocols including RRC, PDCP, RLC, MAC, and L1 protocols. In this manner, the AN 208 may enable data/voice connectivity between CN 220 and the UE 202. In some embodiments, the AN 208 may be implemented in a discrete device or as one or more software entities running on server computers as part of, for example, a virtual network, which may be referred to as a CRAN or virtual baseband unit pool. The AN 208 be referred to as a BS, gNB, RAN node, eNB, ng-eNB, NodeB, RSU, TRxP, TRP, etc. The AN 208 may be a macrocell base station or a low power base station for providing femtocells, picocells or other like cells having smaller coverage areas, smaller user capacity, or higher bandwidth compared to macrocells.

In embodiments in which the RAN 204 includes a plurality of ANs, they may be coupled with one another via an X2 interface (if the RAN 204 is an LTE RAN) or an Xn interface (if the RAN 204 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 204 may each manage one or more cells, cell groups, component carriers, etc. to provide the UE 202 with an air interface for network access. The UE 202 may be simultaneously connected with a plurality of cells provided by the same or different ANs of the RAN 204. For example, the UE 202 and RAN 204 may use carrier aggregation to allow the UE 202 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 204 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 202 or AN 208 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 204 may be an LTE RAN 210 with eNBs, for example, eNB 212. The LTE RAN 210 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 204 may be an NG-RAN 214 with gNBs, for example, gNB 216, or ng-eNBs, for example, ng-eNB 218. The gNB 216 may connect with SG-enabled UEs using a 5G NR interface. The gNB 216 may connect with a 5G core through an NG interface, which may include an N2 interface or an N3 interface. The ng-eNB 218 may also connect with the 5G core through an NG interface, but may connect with a UE via an LTE air interface. The gNB 216 and the ng-eNB 218 may connect with each other over an Xn interface.

In some embodiments, the NG interface may be split into two parts, an NG user plane (NG-U) interface, which carries traffic data between the nodes of the NG-RAN 214 and a UPF 248 (e.g., N3 interface), and an NG control plane (NG-C) interface, which is a signaling interface between the nodes of the NG-RAN214 and an AMF 244 (e.g., N2 interface).

The NG-RAN 214 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 202 can be configured with multiple BWPs where each BWP configuration has a different SCS. When a BWP change is indicated to the UE 202, the SCS of the transmission is changed as well. Another use case example of BWP is related to power saving. In particular, multiple BWPs can be configured for the UE 202 with different amount of frequency resources (for example, PRBs) to support data transmission under different traffic loading scenarios. A BWP containing a smaller number of PRBs can be used for data transmission with small traffic load while allowing power saving at the UE 202 and in some cases at the gNB 216. A BWP containing a larger number of PRBs can be used for scenarios with higher traffic load.

The RAN 204 is communicatively coupled to CN 220 that includes network elements to provide various functions to support data and telecommunications services to customers/subscribers (for example, users of UE 202). The components of the CN 220 may be implemented in one physical node or separate physical nodes. In some embodiments, NFV may be utilized to virtualize any or all of the functions provided by the network elements of the CN 220 onto physical compute/storage resources in servers, switches, etc. A logical instantiation of the CN 220 may be referred to as a network slice, and a logical instantiation of a portion of the CN 220 may be referred to as a network sub-slice.

In some embodiments, the CN 220 may be an LTE CN 222, which may also be referred to as an EPC. The LTE CN 222 may include MME 224, SGW 226, SGSN 228, HSS 230, PGW 232, and PCRF 234 coupled with one another over interfaces (or "reference points") as shown. Functions of the elements of the LTE CN 222 may be briefly introduced as follows.

The MME 224 may implement mobility management functions to track a current location of the UE 202 to facilitate paging, bearer activation/deactivation, handovers, gateway selection, authentication, etc.

The SGW 226 may terminate an S 1 interface toward the RAN and route data packets between the RAN and the LTE CN 222. The SGW 226 may be a local mobility anchor point for inter-RAN node handovers and also may provide an anchor for inter-3GPP mobility. Other responsibilities may include lawful intercept, charging, and some policy enforcement.

The SGSN 228 may track a location of the UE 202 and perform security functions and access control. In addition, the SGSN 228 may perform inter-EPC node signaling for mobility between different RAT networks; PDN and S-GW selection as specified by MME 224; MME selection for handovers; etc. The S3 reference point between the MME 224 and the SGSN 228 may enable user and bearer information exchange for inter-3GPP access network mobility in idle/active states.

The HSS 230 may include a database for network users, including subscription-related information to support the network entities' handling of communication sessions. The HSS 230 can provide support for routing/roaming, authentication, authorization, naming/addressing resolution, location dependencies, etc. An S6a reference point between the HSS 230 and the MME 224 may enable transfer of subscription and authentication data for authenticating/authorizing user access to the LTE CN 220.

The PGW 232 may terminate an SGi interface toward a data network (DN) 236 that may include an application/content server 238. The PGW 232 may route data packets between the LTE CN 222 and the data network 236. The PGW 232 may be coupled with the SGW 226 by an S5 reference point to facilitate user plane tunneling and tunnel management. The PGW 232 may further include a node for policy enforcement and charging data collection (for example, PCEF). Additionally, the SGi reference point between the PGW 232 and the data network 236 may be an operator external public, a private PDN, or an intra-operator packet data network, for example, for provision of IMS services. The PGW 232 may be coupled with a PCRF 234 via a Gx reference point.

The PCRF 234 is the policy and charging control element of the LTE CN 222. The PCRF 234 may be communicatively coupled to the app/content server 238 to determine appropriate QoS and charging parameters for service flows. The PCRF 232 may provision associated rules into a PCEF (via Gx reference point) with appropriate TFT and QCI.

In some embodiments, the CN 220 may be a 5GC 240. The 5GC 240 may include an AUSF 242, AMF 244, SMF 246, UPF 248, NSSF 250, NEF 252, NRF 254, PCF 256, UDM 258, and AF 260 coupled with one another over interfaces (or "reference points") as shown. Functions of the elements of the 5GC 240 may be briefly introduced as follows.

The AUSF 242 may store data for authentication of UE 202 and handle authentication-related functionality. The AUSF 242 may facilitate a common authentication framework for various access types. In addition to communicating with other elements of the 5GC 240 over reference points as shown, the AUSF 242 may exhibit an Nausf service-based interface.

The AMF 244 may allow other functions of the 5GC 240 to communicate with the UE 202 and the RAN 204 and to subscribe to notifications about mobility events with respect to the UE 202. The AMF 244 may be responsible for registration management (for example, for registering UE 202), connection management, reachability management, mobility management, lawful interception of AMF-related events, and access authentication and authorization. The AMF 244 may provide transport for SM messages between the UE 202 and the SMF 246, and act as a transparent proxy for routing SM messages. AMF 244 may also provide transport for SMS messages between UE 202 and an SMSF. AMF 244 may interact with the AUSF 242 and the UE 202 to perform various security anchor and context management functions. Furthermore, AMF 244 may be a termination point of a RAN CP interface, which may include or be an N2 reference point between the RAN 204 and the AMF 244; and the AMF 244 may be a termination point of NAS (N1) signaling, and perform NAS ciphering and integrity protection. AMF 244 may also support NAS signaling with the UE 202 over an N3 IWF interface.

The SMF 246 may be responsible for SM (for example, session establishment, tunnel management between UPF 248 and AN 208); UE IP address allocation and management (including optional authorization); selection and control of UP function; configuring traffic steering at UPF 248 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 244 over N2 to AN 208; and determining SSC mode of a session. SM may refer to management of a PDU session, and a PDU session or "session" may refer to a PDU connectivity service that provides or enables the exchange of PDUs between the UE 202 and the data network 236.

The UPF 248 may act as an anchor point for intra-RAT and inter-RAT mobility, an external PDU session point of interconnect to data network 236, and a branching point to support multi-homed PDU session. The UPF 248 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 248 may include an uplink classifier to support routing traffic flows to a data network.

The NSSF 250 may select a set of network slice instances serving the UE 202. The NSSF 250 may also determine allowed NSSAI and the mapping to the subscribed S-NSSAIs, if needed. The NSSF 250 may also determine the AMF set to be used to serve the UE 202, or a list of candidate AMFs based on a suitable configuration and possibly by querying the NRF 254. The selection of a set of network slice instances for the UE 202 may be triggered by the AMF 244 with which the UE 202 is registered by interacting with the NSSF 250, which may lead to a change of AMF. The NSSF 250 may interact with the AMF 244 via an N22 reference point; and may communicate with another NSSF in a visited network via an N31 reference point (not shown). Additionally, the NSSF 250 may exhibit an Nnssf service-based interface.

The NEF 252 may securely expose services and capabilities provided by 3GPP network functions for third party, internal exposure/re-exposure, AFs (e.g., AF 260), edge computing or fog computing systems, etc. In such embodiments, the NEF 252 may authenticate, authorize, or throttle the AFs. NEF 252 may also translate information exchanged with the AF 260 and information exchanged with internal network functions. For example, the NEF 252 may translate between an AF-Service-Identifier and an internal 5GC information. NEF 252 may also receive information from other NFs based on exposed capabilities of other NFs. This information may be stored at the NEF 252 as structured data, or at a data storage NF using standardized interfaces. The stored information can then be re-exposed by the NEF 252 to other NFs and AFs, or used for other purposes such as analytics. Additionally, the NEF 252 may exhibit an Nnef service-based interface.

The NRF 254 may support service discovery functions, receive NF discovery requests from NF instances, and provide the information of the discovered NF instances to the NF instances. NRF 254 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 254 may exhibit the Nnrf service-based interface.

The PCF 256 may provide policy rules to control plane functions to enforce them, and may also support unified policy framework to govern network behavior. The PCF 256 may also implement a front end to access subscription information relevant for policy decisions in a UDR of the UDM 258. In addition to communicating with functions over reference points as shown, the PCF 256 exhibit an Npcf service-based interface.

The UDM 258 may handle subscription-related information to support the network entities' handling of communication sessions, and may store subscription data of UE 202. For example, subscription data may be communicated via an N8 reference point between the UDM 258 and the AMF 244. The UDM 258 may include two parts, an application front end and a UDR. The UDR may store subscription data and policy data for the UDM 258 and the PCF 256, and/or structured data for exposure and application data (including PFDs for application detection, application request information for multiple UEs 202) for the NEF 252. The Nudr service-based interface may be exhibited by the UDR 221 to allow the UDM 258, PCF 256, and NEF 252 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 258 may exhibit the Nudm service-based interface.

The AF 260 may provide application influence on traffic routing, provide access to NEF, and interact with the policy framework for policy control.

In some embodiments, the 5GC 240 may enable edge computing by selecting operator/3rd party services to be geographically close to a point that the UE 202 is attached to the network. This may reduce latency and load on the network. To provide edge-computing implementations, the 5GC 240 may select a UPF 248 close to the UE 202 and execute traffic steering from the UPF 248 to data network 236 via the N6 interface. This may be based on the UE subscription data, UE location, and information provided by the AF 260. In this way, the AF 260 may influence UPF (re)selection and traffic routing. Based on operator deployment, when AF 260 is considered to be a trusted entity, the network operator may permit AF 260 to interact directly with relevant NFs. Additionally, the AF 260 may exhibit an Naf service-based interface.

The data network 236 may represent various network operator services, Internet access, or third party services that may be provided by one or more servers including, for example, application/content server 238.

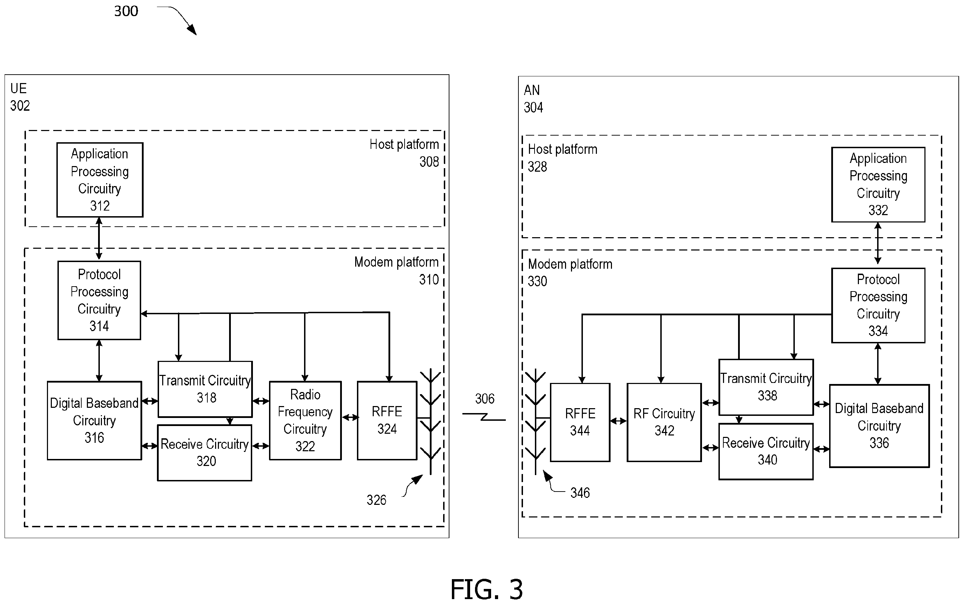

Figure 3 schematically illustrates a wireless network 300 in accordance with various embodiments. The wireless network 300 may include a UE 302 in wireless communication with an AN 304. The UE 302 and AN 304 may be similar to, and substantially interchangeable with, like-named components described elsewhere herein.

The UE 302 may be communicatively coupled with the AN 304 via connection 306. The connection 306 is illustrated as an air interface to enable communicative coupling, and can be consistent with cellular communications protocols such as an LTE protocol or a 5G NR protocol operating at mmWave or sub-6GHz frequencies.

The UE 302 may include a host platform 308 coupled with a modem platform 310. The host platform 308 may include application processing circuitry 312, which may be coupled with protocol processing circuitry 314 of the modem platform 310. The application processing circuitry 312 may run various applications for the UE 302 that source/sink application data. The application processing circuitry 312 may further implement one or more layer operations to transmit/receive application data to/from a data network. These layer operations may include transport (for example UDP) and Internet (for example, IP) operations

The protocol processing circuitry 314 may implement one or more of layer operations to facilitate transmission or reception of data over the connection 306. The layer operations implemented by the protocol processing circuitry 314 may include, for example, MAC, RLC, PDCP, RRC and NAS operations.

The modem platform 310 may further include digital baseband circuitry 316 that may implement one or more layer operations that are "below" layer operations performed by the protocol processing circuitry 314 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 310 may further include transmit circuitry 318, receive circuitry 320, RF circuitry 322, and RF front end (RFFE) 324, which may include or connect to one or more antenna panels 326. Briefly, the transmit circuitry 318 may include a digital-to-analog converter, mixer, intermediate frequency (IF) components, etc.; the receive circuitry 320 may include an analog-to-digital converter, mixer, IF components, etc.; the RF circuitry 322 may include a low-noise amplifier, a power amplifier, power tracking components, etc.; RFFE 324 may include filters (for example, surface/bulk acoustic wave filters), switches, antenna tuners, beamforming components (for example, phase-array antenna components), etc. The selection and arrangement of the components of the transmit circuitry 318, receive circuitry 320, RF circuitry 322, RFFE 324, and antenna panels 326 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 314 may include one or more instances of control circuitry (not shown) to provide control functions for the transmit/receive components.

A UE reception may be established by and via the antenna panels 326, RFFE 324, RF circuitry 322, receive circuitry 320, digital baseband circuitry 316, and protocol processing circuitry 314. In some embodiments, the antenna panels 326 may receive a transmission from the AN 304 by receive-beamforming signals received by a plurality of antennas/antenna elements of the one or more antenna panels 326.

A UE transmission may be established by and via the protocol processing circuitry 314, digital baseband circuitry 316, transmit circuitry 318, RF circuitry 322, RFFE 324, and antenna panels 326. In some embodiments, the transmit components of the UE 304 may apply a spatial filter to the data to be transmitted to form a transmit beam emitted by the antenna elements of the antenna panels 326.

Similar to the UE 302, the AN 304 may include a host platform 328 coupled with a modem platform 330. The host platform 328 may include application processing circuitry 332 coupled with protocol processing circuitry 334 of the modem platform 330. The modem platform may further include digital baseband circuitry 336, transmit circuitry 338, receive circuitry 340, RF circuitry 342, RFFE circuitry 344, and antenna panels 346. The components of the AN 304 may be similar to and substantially interchangeable with like-named components of the UE 302. In addition to performing data transmission/reception as described above, the components of the AN 308 may perform various logical functions that include, for example, RNC functions such as radio bearer management, uplink and downlink dynamic radio resource management, and data packet scheduling.

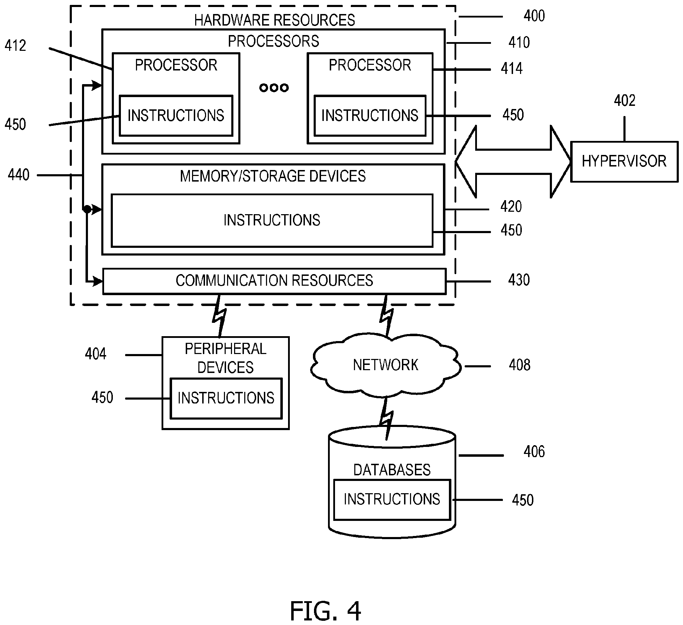

Figure 4 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 4 shows a diagrammatic representation of hardware resources 400 including one or more processors (or processor cores) 410, one or more memory/storage devices 420, and one or more communication resources 430, each of which may be communicatively coupled via a bus 440 or other interface circuitry. For embodiments where node virtualization (e.g., NFV) is utilized, a hypervisor 402 may be executed to provide an execution environment for one or more network slices/sub-slices to utilize the hardware resources 400.

The processors 410 may include, for example, a processor 412 and a processor 414. The processors 410 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 420 may include main memory, disk storage, or any suitable combination thereof. The memory/storage devices 420 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 430 may include interconnection or network interface controllers, components, or other suitable devices to communicate with one or more peripheral devices 404 or one or more databases 406 or other network elements via a network 408. For example, the communication resources 430 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 450 may comprise software, a program, an application, an applet, an app, or other executable code for causing at least any of the processors 410 to perform any one or more of the methodologies discussed herein. The instructions 450 may reside, completely or partially, within at least one of the processors 410 (e.g., within the processor's cache memory), the memory/storage devices 420, or any suitable combination thereof. Furthermore, any portion of the instructions 450 may be transferred to the hardware resources 400 from any combination of the peripheral devices 404 or the databases 406. Accordingly, the memory of processors 410, the memory/storage devices 420, the peripheral devices 404, and the databases 406 are examples of computer-readable and machine-readable media.

### EXAMPLE PROCEDURES

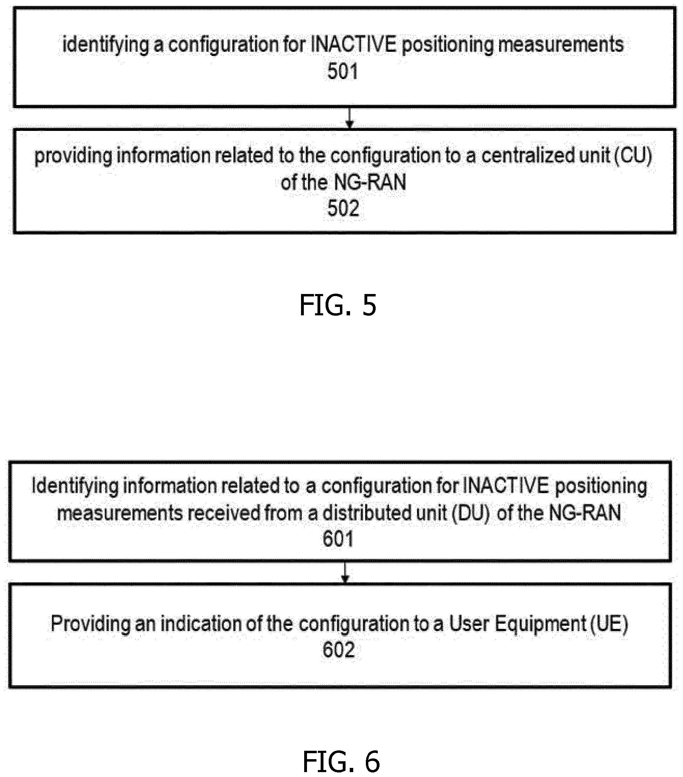

In some embodiments, the electronic device(s), network(s), system(s), chip(s) or component(s), or portions or implementations thereof, of Figures 2-4, or some other figure herein, may be configured to perform one or more processes, techniques, or methods as described herein, or portions thereof. One such process is depicted in Figure 5. The process may be performed by a distributed unit (DU) of a next generation radio access network (NG-RAN), one or more elements of the DU, and/or an electronic device that implements or includes the DU. The process may include identifying, at 501, a configuration for INACTIVE positioning measurements; and providing, at 502, information related to the configuration to a centralized unit (CU) of the NG-RAN.

Another such process is depicted at Figure 6. The process may be performed by a centralized unit (CU) of a next generation radio access network (NG-RAN), one or more elements of the CU, and/or an electronic device that implements or includes the CU. The process may include identifying, at 601, information related to a configuration for INACTIVE positioning measurements received from a distributed unit (DU) of the NG-RAN; and providing, at 602, an indication of the configuration to a user equipment (UE).

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include the method for network to support positioning INACTIVE measurement configuration for a UE, to be used for positioning measurements while the UE is INACTIVE state,

Example 2 may include where the system is 5G NR,

Example 3 may include where the network provides positioning INACTIVE measurement configuration to the UE when releasing the UE from RRC_CONNECTED to RRC_INACTIVE state via RRCRelease message,

Example 4 may include where the network is a gNB in a split NG-RAN architecture, split into Centralized Unit (CU) and Distributed Unit (DU),

Example 5 may include where the DU generates the configuration for INACTIVE positioning measurement and provides to the CU over F1AP,

Example 6 may include as per Example 5, and/or some other example herein,, where the configuration for INACTIVE positioning measurement is carried from the DU to the CU through the F1AP DU to CU RRC Information IE,

Example 7 may include as per Example 5, and/or some other example herein,, where the configuration for INACTIVE positioning measurement is carried from the DU to the CU over a F1AP UE-associated signaling message sent from the DU to the CU,

Example 8 may include as per Example 4, and/or some other example herein,, where the CU requests the DU to provide the configuration for INACTIVE positioning measurement over F1AP,

Example 9 may include as per Example 8, and/or some other example herein,, where the UE Context Modification procedure is used by the CU to retrieve the configuration for INACTIVE positioning measurement from the DU,

Example 10 may include as per Example 9, and/or some other example herein,, where the DU provides the requested configuration for INACTIVE positioning measurement in the response message of the UE Context Modification procedure to the CU,

Example 11 may include as per Example 10, and/or some other example herein,, where the response message may include the DU to CU RRC Information IE that contains the requested configuration for INACTIVE positioning measurement,

Example 12 may include as per Example 8, and/or some other example herein,, where a CU-initiated class-1 F1AP signaling procedure is used by the CU to retrieve the configuration for INACTIVE positioning measurement from the DU,

Example 13 may include as per Example 12, and/or some other example herein,, where the DU provides the requested configuration for INACTIVE positioning measurement in the response message of the CU-initiated class-1 F1AP signaling procedure.

Example 14 may include a method to be performed by a distributed unit (DU) of a next generation radio access network (NG-RAN), one or more elements of the DU, and/or an electronic device that implements or includes the DU, wherein the method comprises:
identifying a configuration for INACTIVE positioning measurements; and
providing information related to the configuration to a centralized unit (CU) of the NG-RAN.

Example 15 may include the method of example 14, and/or some other example herein, wherein the information is provided over a F1AP interface.

Example 16 may include the method of any of examples 14-15, and/or some other example herein, wherein the identifying is based on a query received from the CU.

Example 17 may include a method to be performed by a centralized unit (CU) of a next generation radio access network (NG-RAN), one or more elements of the CU, and/or an electronic device that implements or includes the CU, wherein the method comprises: identifying information related to a configuration for INACTIVE positioning measurements received from a distributed unit (DU) of the NG-RAN; and providing an indication of the configuration to a user equipment (UE).

Example 18 may include the method of example 17, and/or some other example herein, wherein the information is received over an F1AP interface.

Example 19 may include the method of any of examples 17-18, and/or some other example herein, wherein the indication is provided in a RRCRelease message.

Example 20 may include the method of any of examples 17-19, an/or some other example herein, wherein the indication is received based on a query transmitted from the CU to the DU.

In example 21 and according to any other examples, the subject matter includes an apparatus of a Distributed Unit (DU) configured for operation in a next generation radio access network (NG-RAN), the apparatus may include processing circuitry configured to: identify a configuration for INACTIVE positioning measurement; and provide the configuration to a Centralized Unit (CU).

In example 22, the subject matter of example 21, can optionally include that the configuration is provided to the CU over an F1 application protocol (F1AP) interface connecting the DU to the CU.

In example 23, the subject matter of example 22, can optionally include that the configuration is provided to the CU over an F1AP UE-associated signaling message.

In example 24, the subject matter of example 23, can optionally include that the configuration is provided through a dedicated information element.

In example 25, the subject matter of any one of examples 21 to 24, can optionally include that the configuration includes an SRS-PosRRC-InactiveConfig information for a user equipment (UE).

In example 26, the subject matter of any one of examples 21 to 25, can optionally include that the processing circuitry is configured to generate the configuration based on a request from the CU.

In example 27, the subject matter of any one of examples 21 to 26, can optionally include that the DU is an entity of a split NG-RAN architecture including the DU and the CU as a gNodeB (gNB).

In example 28, the subject matter includes a method for a Distributed Unit (DU) of a next generation radio access network (NG-RAN), the method may include: identifying a configuration for INACTIVE positioning measurement; and providing the configuration to a Centralized Unit (CU).

In example 29, the subject matter of example 28, can optionally include that the configuration is provided to the CU over an F1 application protocol (F1AP) interface connecting the DU to the CU.

In example 30, the subject matter of example 29, can optionally include that the configuration is provided to the CU over an F1AP UE-associated signaling message.

In example 31, the subject matter of example 30, can optionally include that the configuration is provided through a dedicated information element.

In example 32, the subject matter of any one of examples 28 to 31, can optionally include that the configuration includes an SRS-PosRRC-InactiveConfig information for a user equipment (UE).

In example 33, the subject matter of any one of examples 28 to 32, further may include generating the configuration based on a request from the CU.

In example 34, the subject matter of any one of examples 28 to 33, can optionally include that the DU is an entity of a split NG-RAN architecture including the DU and the CU as a gNodeB (gNB).

In example 35, a non-transitory computer-readable medium may include one or more instructions which, if executed by a processor of a Distributed Unit (DU) of a next generation radio access network (NG-RAN), cause the processor to perform a method of any one of examples 28 to 34.

In example 36, the subject matter includes an apparatus of a Centralized Unit (CU) configured for operation in a next generation radio access network (NG-RAN), the apparatus may include processing circuitry configured to: identify information related to a configuration for INACTIVE positioning measurement received from a Distributed Unit (DU) of the next generation radio access network (NG-RAN); provide an indication of the configuration to a User Equipment (UE).

In example 37, the subject matter of example 36, can optionally include that the information is received based on a query indication transmitted from the CU to the DU.

In example 38, the subject matter of example 37, can optionally include that the information is received over an F1 Application Protocol (F1AP) interface.

In example 39, the subject matter of example 38, can optionally include that the query indication is implemented in a CU-initiated and UE-associated class 1 signaling procedure through a dedicated information element (IE).

In example 40, the subject matter of any one of examples 36 to 39, can optionally include that the indication is provided in an RRCRelease message.

In example 41, the subject matter of any one of examples 35 to 40, can optionally include that the CU is an entity of a split NG-RAN architecture including the DU and the CU as a gNodeB (gNB).

In example 42, the subject matter includes a method for a Centralized Unit (CU) of a next generation radio access network (NG-RAN), the method may include: identifying information related to a configuration for INACTIVE positioning measurement received from a Distributed Unit (DU) of the next generation radio access network (NG-RAN); providing an indication of the configuration to a User Equipment (UE).

In example 43, the subject matter of example 42, can optionally include that the information is received based on a query indication transmitted from the CU to the DU.

In example 44, the subject matter of example 43, can optionally include that the information is received over an F1 Application Protocol (F1AP) interface.

In example 45, the subject matter of example 44, can optionally include that the query is implemented in a CU-initiated and UE-associated class 1 signaling procedure through a dedicated information element (IE).

In example 46, the subject matter of any one of examples 42 to 45, can optionally include that the indication is provided in an RRCRelease message.

In example 47, the subject matter of any one of examples 42 to 46, can optionally include that the CU is an entity of a split NG-RAN architecture including the DU and the CU as a gNodeB (gNB).

In example 48, a non-transitory computer-readable medium may include one or more instructions which, if executed by a processor of a Centralized Unit (DU) of a next generation radio access network (NG-RAN), cause the processor to perform a method of any one of examples 42 to 47.

Example Z01 may include an apparatus comprising means to perform one or more elements of a method described in or related to any of examples 1-20, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-20, or any other method or process described herein.

Example Z03 may include an apparatus comprising logic, modules, or circuitry to perform one or more elements of a method described in or related to any of examples 1-20, or any other method or process described herein.

Example Z04 may include a method, technique, or process as described in or related to any of examples 1-20, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-20, or portions thereof.

Example Z06 may include a signal as described in or related to any of examples 1-20, or portions or parts thereof.

Example Z07 may include a datagram, packet, frame, segment, protocol data unit (PDU), or message as described in or related to any of examples 1-20, or portions or parts thereof, or otherwise described in the present disclosure.

Example Z08 may include a signal encoded with data as described in or related to any of examples 1-20, or portions or parts thereof, or otherwise described in the present disclosure.

Example Z09 may include a signal encoded with a datagram, packet, frame, segment, protocol data unit (PDU), or message as described in or related to any of examples 1-20, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-20, or portions thereof.

Example Z11 may include a computer program comprising instructions, wherein execution of the program by a processing element is to cause the processing element to carry out the method, techniques, or process as described in or related to any of examples 1-20, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein:

3GPP may refer to Third Generation Partnership Project; 4G may refer to Fourth Generation; 5G may refer to Fifth Generation; 5GC may refer to 5G Core network; AC may refer to Application Client; ACR may refer to Application Context Relocation; ACK may refer to Acknowledgement; ACID may refer to Application Client Identification; AF may refer to Application Function; AM may refer to Acknowledged Mode; AMBR may refer to Aggregate Maximum Bit Rate; AMF may refer to Access and Mobility Management Function; AN may refer to Access Network; ANR may refer to Automatic Neighbour Relation; AOA may refer to Angle of Arrival; AP may refer to Application Protocol, Antenna Port, Access Point; API may refer to Application Programming Interface; APN may refer to Access Point Name; ARP may refer to Allocation and Retention Priority; ARQ may refer to Automatic Repeat Request; AS may refer to Access Stratum; ASP may refer to Application Service Provider; ASN. 1 may refer to Abstract Syntax Notation One; AUSF may refer to Authentication Server Function; AWGN may refer to Additive White Gaussian Noise; BAP may refer to Backhaul Adaptation Protocol; BCH may refer to Broadcast Channel; BER may refer to Bit Error Ratio; BFD may refer to Beam Failure Detection; BLER may refer to Block Error Rate; BPSK may refer to Binary Phase Shift Keying; BRAS may refer to Broadband Remote Access Server; BSS may refer to Business Support System; BS may refer to Base Station; BSR may refer to Buffer Status Report; BW may refer to Bandwidth; BWP may refer to Bandwidth Part; C-RNTI may refer to Cell Radio Network Temporary Identity; CA may refer to Carrier Aggregation, Certification Authority; CAPEX may refer to CAPital EXpenditure; CBRA may refer to Contention Based Random Access; CC may refer to Component Carrier, Country Code, Cryptographic Checksum; CCA may refer to Clear Channel Assessment; CCE may refer to Control Channel Element; CCCH may refer to Common Control Channel; CE may refer to Coverage Enhancement; CDM may refer to Content Delivery Network; CDMA may refer to Code-Division Multiple Access; CDR may refer to Charging Data Request; CDR may refer to Charging Data Response; CFRA may refer to Contention Free Random Access; CG may refer to Cell Group; CGF may refer to Charging Gateway Function; CHF may refer to Charging Function; CI may refer to Cell Identity; CID may refer to Cell-ID (e.g., positioning method); CIM may refer to Common Information Model; CIR may refer to Carrier to Interference Ratio; CK may refer to Cipher Key; CM may refer to Connection Management, Conditional Mandatory; CMAS may refer to Commercial Mobile Alert Service; CMD may refer to Command; CMS may refer to Cloud Management System; CO may refer to Conditional Optional; CoMP may refer to Coordinated Multi-Point; CORESET may refer to Control Resource Set; COTS may refer to Commercial Off-The-Shelf; CP may refer to Control Plane, Cyclic Prefix, Connection Point; CPD may refer to Connection Point Descriptor; CPE may refer to Customer Premise Equipment; CPICH may refer to Common Pilot Channel; CQI may refer to Channel Quality Indicator; CPU may refer to CSI processing unit, Central Processing Unit; C/R may refer to Command/Response field bit; CRAN may refer to Cloud Radio Access Network, Cloud RAN; CRB may refer to Common Resource Block; CRC may refer to Cyclic Redundancy Check; CRI may refer to Channel-State Information Resource Indicator, CSI-RS Resource Indicator; C-RNTI may refer to Cell RNTI; CS may refer to Circuit Switched; CSCF may refer to call session control function; CSAR may refer to Cloud Service Archive; CSI may refer to Channel-State Information; CSI-IM may refer to CSI Interference Measurement; CSI-RS may refer to CSI Reference Signal; CSI-RSRP may refer to CSI reference signal received power; CSI-RSRQ may refer to CSI reference signal received quality; CSI-SINR may refer to CSI signal-to-noise and interference ratio; CSMA may refer to Carrier Sense Multiple Access; CSMA/CA may refer to CSMA with collision avoidance; CSS may refer to Common Search Space, Cell-specific Search Space; CTF may refer to Charging Trigger Function; CTS may refer to Clear-to-Send; CW may refer to Codeword; CWS may refer to Contention Window Size; D2D may refer to Device-to-Device; DC may refer to Dual Connectivity, Direct Current; DCI may refer to Downlink Control Information; DF may refer to Deployment Flavour; DL may refer to Downlink; DMTF may refer to Distributed Management Task Force; DPDK may refer to Data Plane Development Kit; DM-RS, DMRS may refer to Demodulation Reference Signal; DN may refer to Data network; DNN may refer to Data Network Name; DNAI may refer to Data Network Access Identifier; DRB may refer to Data Radio Bearer; DRS may refer to Discovery Reference Signal; DRX may refer to Discontinuous Reception; DSL may refer to Domain Specific Language. Digital Subscriber Line; DSLAM may refer to DSL Access Multiplexer; DwPTS may refer to Downlink Pilot Time Slot; E-LAN may refer to Ethernet Local Area Network; E2E may refer to End-to-End; EAS may refer to Edge Application Server; ECCA may refer to extended clear channel assessment, extended CCA; ECCE may refer to Enhanced Control Channel Element, Enhanced CCE; ED may refer to Energy Detection; EDGE may refer to Enhanced Datarates for GSM Evolution (GSM Evolution); EAS may refer to Edge Application Server; EASID may refer to Edge Application Server Identification; ECS may refer to Edge Configuration Server; ECSP may refer to Edge Computing Service Provider; EDN may refer to Edge Data Network; EEC may refer to Edge Enabler Client; EECID may refer to Edge Enabler Client Identification; EES may refer to Edge Enabler Server; EESID may refer to Edge Enabler Server Identification; EHE may refer to Edge Hosting Environment; EGMF may refer to Exposure Governance Management Function; EGPRS may refer to Enhanced GPRS; EIR may refer to Equipment Identity Register; eLAA may refer to enhanced Licensed Assisted Access, enhanced LAA; EM may refer to Element Manager; eMBB may refer to Enhanced Mobile Broadband; EMS may refer to Element Management System; eNB may refer to evolved NodeB, E-UTRAN Node B; EN-DC may refer to E-UTRA-NR Dual Connectivity; EPC may refer to Evolved Packet Core; EPDCCH may refer to enhanced PDCCH, enhanced Physical Downlink Control Cannel; EPRE may refer to Energy per resource element; EPS may refer to Evolved Packet System; EREG may refer to enhanced REG, enhanced resource element groups; ETSI may refer to European Telecommunications Standards Institute; ETWS may refer to Earthquake and Tsunami Warning System; eUICC may refer to embedded UICC, embedded Universal Integrated Circuit Card; E-UTRA may refer to Evolved UTRA; E-UTRAN may refer to Evolved UTRAN; EV2X may refer to Enhanced V2X; F1AP may refer to F1 Application Protocol; F1-C may refer to F1 Control plane interface; F1-U may refer to F1 User plane interface; FACCH may refer to Fast Associated Control CHannel; FACCH/F may refer to Fast Associated Control Channel/Full rate; FACCH/H may refer to Fast Associated Control Channel/Half rate; FACH may refer to Forward Access Channel; FAUSCH may refer to Fast Uplink Signalling Channel; FB may refer to Functional Block; FBI may refer to Feedback Information; FCC may refer to Federal Communications Commission; FCCH may refer to Frequency Correction CHannel; FDD may refer to Frequency Division Duplex; FDM may refer to Frequency Division Multiplex; FDMA may refer to Frequency Division Multiple Access; FE may refer to Front End; FEC may refer to Forward Error Correction; FFS may refer to For Further Study; FFT may refer to Fast Fourier Transformation; feLAA may refer to further enhanced Licensed Assisted Access, further enhanced LAA; FN may refer to Frame Number; FPGA may refer to Field-Programmable Gate Array; FR may refer to Frequency Range; FQDN may refer to Fully Qualified Domain Name; G-RNTI may refer to GERAN Radio Network Temporary Identity; GERAN may refer to GSM EDGE RAN, GSM EDGE Radio Access Network; GGSN may refer to Gateway GPRS Support Node; GLONASS may refer to GLObal'naya NAvigatsionnaya Sputnikovaya Sistema (Engl.: Global Navigation Satellite System); gNB may refer to Next Generation NodeB; gNB-CU may refer to gNB-centralized unit, Next Generation NodeB centralized unit; gNB-DU may refer to gNB-distributed unit, Next Generation NodeB distributed unit; GNSS may refer to Global Navigation Satellite System; GPRS may refer to General Packet Radio Service; GPSI Generic Public Subscription may refer to Identifier; GSM may refer to Global System for Mobile Communications, Groupe Spécial Mobile; GTP may refer to GPRS Tunneling Protocol; GTP-U may refer to GPRS Tunnelling Protocol for User Plane; GTS may refer to Go To Sleep Signal (related to WUS); GLTMMEI may refer to Globally Unique MME Identifier; GUTI may refer to Globally Unique Temporary UE Identity; HARQ may refer to Hybrid ARQ, Hybrid Automatic Repeat Request; HANDO may refer to Handover; HFN may refer to HyperFrame Number; HHO may refer to Hard Handover; HLR may refer to Home Location Register; HN may refer to Home Network; HO may refer to Handover; HPLMN may refer to Home Public Land Mobile Network; HSDPA may refer to High Speed Downlink Packet Access; HSN may refer to Hopping Sequence Number; HSPA may refer to High Speed Packet Access; HSS may refer to Home Subscriber Server; HSUPA may refer to High Speed Uplink Packet Access; HTTP may refer to Hyper Text Transfer Protocol; HTTPS may refer to Hyper Text Transfer Protocol Secure (https is http/1.1 over SSL, i.e. port 443); I-Block may refer to Information Block; ICCID may refer to Integrated Circuit Card Identification; IAB may refer to Integrated Access and Backhaul; ICIC may refer to Inter-Cell Interference Coordination; ID may refer to Identity, identifier; IDFT may refer to Inverse Discrete Fourier Transform; IE may refer to Information element; IBE may refer to In-Band Emission; IEEE may refer to Institute of Electrical and Electronics Engineers; IEI may refer to Information Element Identifier; IEIDL may refer to Information Element Identifier Data Length; IETF may refer to Internet Engineering Task Force; IF may refer to Infrastructure; IIOT may refer to Industrial Internet of Things; IM may refer to Interference Measurement, Intermodulation, IP Multimedia; IMC may refer to IMS Credentials; IMEI may refer to International Mobile Equipment Identity; IMGI may refer to International mobile group identity; IMPI may refer to IP Multimedia Private Identity; IMPU may refer to IP Multimedia PUblic identity; IMS may refer to IP Multimedia Subsystem; IMSI may refer to International Mobile Subscriber Identity; IoT may refer to Internet of Things; IP may refer to Internet Protocol; Ipsec may refer to IP Security, Internet Protocol Security; IP-CAN may refer to IP-Connectivity Access Network; IP-M may refer to IP Multicast; IPv4 may refer to Internet Protocol Version 4; IPv6 may refer to Internet Protocol Version 6; IR may refer to Infrared; IS may refer to In Sync; IRP may refer to Integration Reference Point; ISDN may refer to Integrated Services Digital Network; ISIM may refer to IM Services Identity Module; ISO may refer to International Organisation for Standardisation; ISP may refer to Internet Service Provider; IWF may refer to Interworking-Function; I-WLAN may refer to Interworking WLANConstraint length of the convolutional code, USIM Individual key; may refer to Constraint length of the convolutional code, USIM Individual key; kB may refer to Kilobyte (1000 bytes); kbps may refer to kilo-bits per second; Kc may refer to Ciphering key; Ki may refer to Individual subscriber authentication key; KPI may refer to Key Performance Indicator; KQI may refer to Key Quality Indicator; KSI may refer to Key Set Identifier; ksps may refer to kilo-symbols per second; KVM may refer to Kernel Virtual Machine; L1 may refer to Layer 1 (physical layer); L1-RSRP may refer to Layer 1 reference signal received power; L2 may refer to Layer 2 (data link layer); L3 may refer to Layer 3 (network layer); LAA may refer to Licensed Assisted Access; LAN may refer to Local Area Network; LADN may refer to Local Area Data Network; LBT may refer to Listen Before Talk; LCM may refer to LifeCycle Management; LCR may refer to Low Chip Rate; LCS may refer to Location Services; LCID may refer to Logical Channel ID; LI may refer to Layer Indicator; LLC may refer to Logical Link Control, Low Layer Compatibility; LMF may refer to Location Management Function; LOS may refer to Line of Sight; LPLMN may refer to Local PLMN; LPP may refer to LTE Positioning Protocol; LSB may refer to Least Significant Bit; LTE may refer to Long Term Evolution; LWA may refer to LTE-WLAN aggregation; LWIP may refer to LTE/WLAN Radio Level Integration with IPsec Tunnel; LTE may refer to Long Term Evolution; M2M may refer to Machine-to-Machine; MAC may refer to Medium Access Control (protocol layering context); MAC may refer to Message authentication code (security/encryption context); MAC-A may refer to MAC used for authentication and key agreement (TSG T WG3 context); MAC-I may refer to MAC used for data integrity of signalling messages (TSG T WG3 context); MANO may refer to Management and Orchestration; MBMS may refer to Multimedia Broadcast and Multicast Service; MBSFN may refer to Multimedia Broadcast multicast service Single Frequency Network; MCC may refer to Mobile Country Code; MCG may refer to Master Cell Group; MCOT may refer to Maximum Channel Occupancy Time; MCS may refer to Modulation and coding scheme; MDAF may refer to Management Data Analytics Function; MDAS may refer to Management Data Analytics Service; MDT may refer to Minimization of Drive Tests; ME may refer to Mobile Equipment; MeNB may refer to master eNB; MER may refer to Message Error Ratio; MGL may refer to Measurement Gap Length; MGRP may refer to Measurement Gap Repetition Period; MIB may refer to Master Information Block, Management Information Base; MIMO may refer to Multiple Input Multiple Output; MLC may refer to Mobile Location Centre; MM may refer to Mobility Management; MME may refer to Mobility Management Entity; MN may refer to Master Node; MNO may refer to Mobile Network Operator; MO may refer to Measurement Object, Mobile Originated; MPBCH may refer to MTC Physical Broadcast CHannel; MPDCCH may refer to MTC Physical Downlink Control CHannel; MPDSCH may refer to MTC Physical Downlink Shared CHannel; MPRACH may refer to MTC Physical Random Access CHannel; MPUSCH may refer to MTC Physical Uplink Shared Channel; MPLS may refer to MultiProtocol Label Switching; MS may refer to Mobile Station; MSB may refer to Most Significant Bit; MSC may refer to Mobile Switching Centre; MSI may refer to Minimum System Information, MCH Scheduling Information; MSID may refer to Mobile Station Identifier; MSIN may refer to Mobile Station Identification Number; MSISDN may refer to Mobile Subscriber ISDN Number; MT may refer to Mobile Terminated, Mobile Termination; MTC may refer to Machine-Type Communications; mMTC may refer to massive MTC, massive Machine-Type Communications; MU-MIMO may refer to Multi User MIMO; MWUS may refer to MTC wake-up signal, MTC WUS; NACK may refer to Negative Acknowledgement; NAI may refer to Network Access Identifier; NAS may refer to Non-Access Stratum, Non-Access Stratum layer; NCT may refer to Network Connectivity Topology; NC-JT may refer to Non-Coherent Joint Transmission; NEC may refer to Network Capability Exposure; NE-DC may refer to NR-E-UTRA Dual Connectivity; NEF may refer to Network Exposure Function; NF may refer to Network Function; NFP may refer to Network Forwarding Path; NFPD may refer to Network Forwarding Path Descriptor; NFV may refer to Network Functions Virtualization; NFVI may refer to NFV Infrastructure; NFVO may refer to NFV Orchestrator; NG may refer to Next Generation, Next Gen; NGEN-DC may refer to NG-RAN E-UTRA-NR Dual Connectivity; NM may refer to Network Manager; NMS may refer to Network Management System; N-PoP may refer to Network Point of Presence; NMIB, N-MIB may refer to Narrowband MIB; NPBCH may refer to Narrowband Physical Broadcast CHannel; NPDCCH may refer to Narrowband Physical Downlink Control CHannel; NPDSCH may refer to Narrowband Physical Downlink Shared CHannel; NPRACH may refer to Narrowband Physical Random Access CHannel; NPUSCH may refer to Narrowband Physical Uplink Shared CHannel; NPSS may refer to Narrowband Primary Synchronization Signal; NSSS may refer to Narrowband Secondary Synchronization Signal; NR may refer to New Radio, Neighbour Relation; NRF may refer to NF Repository Function; NRS may refer to Narrowband Reference Signal; NS may refer to Network Service; NSA may refer to Non-Standalone operation mode; NSD may refer to Network Service Descriptor; NSR may refer to Network Service Record; NSSAI may refer to Network Slice Selection Assistance Information; S-NNSAI may refer to Single-NSSAI; NSSF may refer to Network Slice Selection Function; NW may refer to Network; NWUS may refer to Narrowband wake-up signal, Narrowband WUS; NZP may refer to Non-Zero Power; O&M may refer to Operation and Maintenance; ODU2 may refer to Optical channel Data Unit - type 2; OFDM may refer to Orthogonal Frequency Division Multiplexing; OFDMA may refer to Orthogonal Frequency Division Multiple Access; OOB may refer to Out-of-band; OOS may refer to Out of Sync; OPEX may refer to OPerating EXpense; OSI may refer to Other System Information; OSS may refer to Operations Support System; OTA may refer to over-the-air; PAPR may refer to Peak-to-Average Power Ratio; PAR may refer to Peak to Average Ratio; PBCH may refer to Physical Broadcast Channel; PC may refer to Power Control, Personal Computer; PCC may refer to Primary Component Carrier, Primary CC; P-CSCF may refer to Proxy CSCF; PCell may refer to Primary Cell; PCI may refer to Physical Cell ID, Physical Cell Identity; PCEF may refer to Policy and Charging Enforcement Function; PCF may refer to Policy Control Function; PCRF may refer to Policy Control and Charging Rules Function; PDCP may refer to Packet Data Convergence Protocol, Packet Data Convergence Protocol layer; PDCCH may refer to Physical Downlink Control Channel; PDCP may refer to Packet Data Convergence Protocol; PDN may refer to Packet Data Network, Public Data Network; PDSCH may refer to Physical Downlink Shared Channel; PDU may refer to Protocol Data Unit; PEI may refer to Permanent Equipment Identifiers; PFD may refer to Packet Flow Description; P-GW may refer to PDN Gateway; PHICH may refer to Physical hybrid-ARQ indicator channel; PHY may refer to Physical layer; PLMN may refer to Public Land Mobile Network; PIN may refer to Personal Identification Number; PM may refer to Performance Measurement; PMI may refer to Precoding Matrix Indicator; PNF may refer to Physical Network Function; PNFD may refer to Physical Network Function Descriptor; PNFR may refer to Physical Network Function Record; POC may refer to PTT over Cellular; PP, PTP may refer to Point-to-Point; PPP may refer to Point-to-Point Protocol; PRACH may refer to Physical RACH; PRB may refer to Physical resource block; PRG may refer to Physical resource block group; ProSe may refer to Proximity Services, Proximity-Based Service; PRS may refer to Positioning Reference Signal; PRR may refer to Packet Reception Radio; PS may refer to Packet Services; PSBCH may refer to Physical Sidelink Broadcast Channel; PSDCH may refer to Physical Sidelink Downlink Channel; PSCCH may refer to Physical Sidelink Control Channel; PSSCH may refer to Physical Sidelink Shared Channel; PSFCH physical sidelink feedback may refer to channel; PSCell may refer to Primary SCell; PSS may refer to Primary Synchronization Signal; PSTN may refer to Public Switched Telephone Network; PT-RS may refer to Phase-tracking reference signal; PTT may refer to Push-to-Talk; PUCCH may refer to Physical Uplink Control Channel; PUSCH may refer to Physical Uplink Shared Channel; QAM may refer to Quadrature Amplitude Modulation; QCI may refer to QoS class of identifier; QCL may refer to Quasi co-location; QFI may refer to QoS Flow ID, QoS Flow Identifier; QoS may refer to Quality of Service; QPSK may refer to Quadrature (Quaternary) Phase Shift Keying; QZSS may refer to Quasi-Zenith Satellite System; RA-RNTI may refer to Random Access RNTI; RAB may refer to Radio Access Bearer, Random Access Burst; RACH may refer to Random Access Channel; RADIUS may refer to Remote Authentication Dial In User Service; RAN may refer to Radio Access Network; RAND may refer to RANDom number (used for authentication); RAR may refer to Random Access Response; RAT may refer to Radio Access Technology; RAU may refer to Routing Area Update; RB may refer to Resource block, Radio Bearer; RBG may refer to Resource block group; REG may refer to Resource Element Group; Rel may refer to Release; REQ may refer to REQuest; RF may refer to Radio Frequency; RI may refer to Rank Indicator; RIV may refer to Resource indicator value; RL may refer to Radio Link; RLC may refer to Radio Link Control, Radio Link Control layer; RLC AM may refer to RLC Acknowledged Mode; RLC UM may refer to RLC Unacknowledged Mode; RLF may refer to Radio Link Failure; RLM may refer to Radio Link Monitoring; RLM-RS may refer to Reference Signal for RLM; RM may refer to Registration Management; RMC may refer to Reference Measurement Channel; RMSI may refer to Remaining MSI, Remaining Minimum System Information; RN may refer to Relay Node; RNC may refer to Radio Network Controller; RNL may refer to Radio Network Layer; RNTI may refer to Radio Network Temporary Identifier; ROHC may refer to RObust Header Compression; RRC may refer to Radio Resource Control, Radio Resource Control layer; RRM may refer to Radio Resource Management; RS may refer to Reference Signal; RSRP may refer to Reference Signal Received Power; RSRQ may refer to Reference Signal Received Quality; RSSI may refer to Received Signal Strength Indicator; RSU may refer to Road Side Unit; RSTD may refer to Reference Signal Time difference; RTP may refer to Real Time Protocol; RTS may refer to Ready-To-Send; RTT may refer to Round Trip Time; Rx may refer to Reception, Receiving, Receiver; S1AP may refer to S1 Application Protocol; S1-MME may refer to S1 for the control plane; S1-U may refer to S1 for the user plane; S-CSCF may refer to serving CSCF; S-GW may refer to Serving Gateway; S-RNTI may refer to SRNC Radio Network Temporary Identity; S-TMSI may refer to SAE Temporary Mobile Station Identifier; SA may refer to Standalone operation mode; SAE may refer to System Architecture Evolution; SAP may refer to Service Access Point; SAPD may refer to Service Access Point Descriptor; SAPI may refer to Service Access Point Identifier; SCC may refer to Secondary Component Carrier, Secondary CC; SCell may refer to Secondary Cell; SCEF may refer to Service Capability Exposure Function; SC-FDMA may refer to Single Carrier Frequency Division Multiple Access; SCG may refer to Secondary Cell Group; SCM may refer to Security Context Management; SCS may refer to Subcarrier Spacing; SCTP may refer to Stream Control Transmission Protocol; SDAP may refer to Service Data Adaptation Protocol, Service Data Adaptation Protocol layer; SDL may refer to Supplementary Downlink; SDNF may refer to Structured Data Storage Network Function; SDP may refer to Session Description Protocol; SDSF may refer to Structured Data Storage Function; SDT may refer to Small Data Transmission; SDU may refer to Service Data Unit; SEAF may refer to Security Anchor Function; SeNB may refer to secondary eNB; SEPP may refer to Security Edge Protection Proxy; SFI may refer to Slot format indication; SFTD may refer to Space-Frequency Time Diversity, SFN and frame timing difference; SFN may refer to System Frame Number; SgNB may refer to Secondary gNB; SGSN may refer to Serving GPRS Support Node; S-GW may refer to Serving Gateway; SI may refer to System Information; SI-RNTI may refer to System Information RNTI; SIB may refer to System Information Block; SIM may refer to Subscriber Identity Module; SIP may refer to Session Initiated Protocol; SiP may refer to System in Package; SL may refer to Sidelink; SLA may refer to Service Level Agreement; SM may refer to Session Management; SMF may refer to Session Management Function; SMS may refer to Short Message Service; SMSF may refer to SMS Function; SMTC may refer to SSB-based Measurement Timing Configuration; SN may refer to Secondary Node, Sequence Number; SoC may refer to System on Chip; SON may refer to Self-Organizing Network; SpCell may refer to Special Cell; SP-CSI-RNTI may refer to Semi-Persistent CSI RNTI; SPS may refer to Semi-Persistent Scheduling; SQN may refer to Sequence number; SR may refer to Scheduling Request; SRB may refer to Signalling Radio Bearer; SRS may refer to Sounding Reference Signal; SS may refer to Synchronization Signal; SSB may refer to Synchronization Signal Block; SSID may refer to Service Set Identifier; SS/PBCH may refer to Block; SSBRI may refer to SS/PBCH Block Resource Indicator, Synchronization Signal Block Resource Indicator; SSC may refer to Session and Service Continuity; SS-RSRP may refer to Synchronization Signal based Reference Signal Received Power; SS-RSRQ may refer to Synchronization Signal based Reference Signal Received Quality; SS-SINR may refer to Synchronization Signal based Signal to Noise and Interference Ratio; SSS may refer to Secondary Synchronization Signal; SSSG may refer to Search Space Set Group; SSSIF may refer to Search Space Set Indicator; SST may refer to Slice/Service Types; SU-MIMO may refer to Single User MIMO; SUL may refer to Supplementary Uplink; TA may refer to Timing Advance, Tracking Area; TAC may refer to Tracking Area Code; TAG may refer to Timing Advance Group; TAI may refer to Tracking Area Identity; TAU may refer to Tracking Area Update; TB may refer to Transport Block; TBS may refer to Transport Block Size; TBD may refer to To Be Defined; TCI may refer to Transmission Configuration Indicator; TCP may refer to Transmission Communication Protocol; TDD may refer to Time Division Duplex; TDM may refer to Time Division Multiplexing; TDMA may refer to Time Division Multiple Access; TE may refer to Terminal Equipment; TEID may refer to Tunnel End Point Identifier; TFT may refer to Traffic Flow Template; TMSI may refer to Temporary Mobile Subscriber Identity; TNL may refer to Transport Network Layer; TPC may refer to Transmit Power Control; TPMI may refer to Transmitted Precoding Matrix Indicator; TR may refer to Technical Report; TRP, TRxP may refer to Transmission Reception Point; TRS may refer to Tracking Reference Signal; TRx may refer to Transceiver; TS may refer to Technical Specifications, Technical Standard; TTI may refer to Transmission Time Interval; Tx may refer to Transmission, Transmitting, Transmitter; U-RNTI may refer to UTRAN Radio Network Temporary Identity; UART may refer to Universal Asynchronous Receiver and Transmitter; UCI may refer to Uplink Control Information; UE may refer to User Equipment; UDM may refer to Unified Data Management; UDP may refer to User Datagram Protocol; UDSF may refer to Unstructured Data Storage Network Function; UICC may refer to Universal Integrated Circuit Card; UL may refer to Uplink; UM may refer to Unacknowledged Mode; UML may refer to Unified Modelling Language; UMTS may refer to Universal Mobile Telecommunications System; UP may refer to User Plane; UPF may refer to User Plane Function; URI may refer to Uniform Resource Identifier; URL may refer to Uniform Resource Locator; URLLC may refer to Ultra-Reliable and Low Latency; USB may refer to Universal Serial Bus; USIM may refer to Universal Subscriber Identity Module; USS may refer to UE-specific search space; UTRA may refer to UMTS Terrestrial Radio Access; UTRAN may refer to Universal Terrestrial Radio Access Network; UwPTS may refer to Uplink Pilot Time Slot; V2I may refer to Vehicle-to-Infrastruction; V2P may refer to Vehicle-to-Pedestrian; V2V may refer to Vehicle-to-Vehicle; V2X may refer to Vehicle-to-everything; VIM may refer to Virtualized Infrastructure Manager; VL may refer to Virtual Link,; VLAN may refer to Virtual LAN, Virtual Local Area Network; VM may refer to Virtual Machine; VNF may refer to Virtualized Network Function; VNFFG may refer to VNF Forwarding Graph; VNFFGD may refer to VNF Forwarding Graph Descriptor; VNFM may refer to VNF Manager; VoIP may refer to Voice-over-IP, Voice-over-Internet Protocol; VPLMN may refer to Visited Public Land Mobile Network; VPN may refer to Virtual Private Network; VRB may refer to Virtual Resource Block; WiMAX may refer to Worldwide Interoperability for Microwave Access; WLAN may refer to Wireless Local Area Network; WMAN may refer to Wireless Metropolitan Area Network; WPAN may refer to Wireless Personal Area Network; X2-C may refer to X2-Control plane; X2-U may refer to X2-User plane; XML may refer to eXtensible Markup Language; XRES may refer to EXpected user RESponse; XOR may refer to eXclusive OR; ZC may refer to Zadoff-Chu; ZP may refer to Zero Power.

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by SSB-MeasurementTimingConfiguration.

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

The DU refers to a logical node hosting RLC, MAC and PHY layers of the gNB or en-gNB, and its operation is partly controlled by gNB-CU. One gNB-DU supports one or multiple cells. One cell is supported by only one gNB-DU. The gNB-DU terminates the F1 interface connected with the gNB-CU. The CU refers to a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU.

F1AP includes of Elementary Procedures (EPs). An EP is a unit of interaction between gNB-CU and gNB-DU. EPs are defined separately and are intended to be used to build up complete sequences. An EP consists of an initiating message and possibly a response message. Two kinds of EPs are used: i) Class 1: EPs with response (success and/or failure); ii) Class 2: EPs without response. For Class 1 EPs, the types of responses can be as follows: a) Successful: A signalling message explicitly indicates that the elementary procedure successfully completed with the receipt of the response; b) Unsuccessful: b.i) A signalling message explicitly indicates that the EP failed. b.ii) On time supervision expiry (i.e., absence of expected response). c) Successful and Unsuccessful: One signalling message reports both successful and unsuccessful outcome for the different included requests. The response message used is the one defined for successful outcome.

An SRS-PosRRC-InactiveConfig includes fields: i) bwp: BWP configuration for SRS for Positioning during the RRC_INACTIVE state. If the field is absent UE is configured with an SRS for Positioning associated with the initial UL BWP and transmitted, during the RRC_INACTIVE state, inside the initial UL BWP with the same CP and SCS as configured for initial UL BWP; ii) inactivePosSRS-AbsThreshSS-BlocksConsolidation: absolute RSRP threshold for determining the set of SSBs for derivation of downlink pathloss reference for TA validation; iii) inactivePosSRS-NrofSS-BlocksToAverage: number of SSBs with highest RSRPs for derivation of downlink pathloss reference for TA validation; iv) inactivePosSRS-RSRP-changeThresh: RSRP threshold for the increase/decrease of RSRP for time alignment validation; v) srs-TimeAlignmnetTimer: TA timer for SRS for positioning transmission during RRC_INACTIVE State.

## Claims

1. An apparatus of a Distributed Unit (DU) configured for operation in a fifth generation (5G) network, the apparatus comprising processing circuitry configured to:
identify a configuration for INACTIVE positioning measurement; and
provide the configuration to a Centralized Unit (CU).

2. The apparatus of claim 1, wherein the configuration is provided to the CU over an F1 application protocol (F1AP) interface connecting the DU to the CU.

3. The apparatus of claim 2, wherein the configuration is provided to the CU over an F1AP UE-associated signaling message.

4. The apparatus of claim 3, wherein the configuration is provided through a dedicated information element.

5. The apparatus of any one of claims 1 to 4, wherein the configuration comprises an SRS-PosRRC-InactiveConfig information for a user equipment (UE).

6. The apparatus of any one of claims 1 to 5, wherein the processing circuitry is configured to generate the configuration based on a request from the CU.

7. A method for a Distributed Unit (DU) of a next generation radio access network (NG-RAN), the method comprising:
identifying a configuration for INACTIVE positioning measurement; and providing the configuration to a Centralized Unit (CU).

8. A non-transitory computer-readable medium comprising one or more instructions which, if executed by a processor of a Distributed Unit (DU) of a next generation radio access network (NG-RAN), cause the processor to perform a method of claim 7.

9. An apparatus of a Centralized Unit (CU) configured for operation in a next generation radio access network (NG-RAN), the apparatus comprising processing circuitry configured to:
identify information related to a configuration for INACTIVE positioning measurement received from a Distributed Unit (DU) of the next generation radio access network (NG-RAN);
provide an indication of the configuration to a User Equipment (UE).

10. The apparatus of claim 9, wherein the information is received based on a query indication transmitted from the CU to the DU.

11. The apparatus of claim 10, wherein the information is received over an F1 Application Protocol (F1AP) interface.

12. The apparatus of claim 11, wherein the query indication is implemented in a CU-initiated and UE-associated class 1 signaling procedure through a dedicated information element (IE).

13. The apparatus of any one of claims 9 to 12, wherein the indication is provided in an RRCRelease message.

14. A method for a Centralized Unit (CU) of a next generation radio access network (NG-RAN), the method comprising:
identifying information related to a configuration for INACTIVE positioning measurement received from a Distributed Unit (DU) of the next generation radio access network (NG-RAN);
providing an indication of the configuration to a User Equipment (UE).

15. A non-transitory computer-readable medium comprising one or more instructions which, if executed by a processor of a Centralized Unit (DU) of a next generation radio access network (NG-RAN), cause the processor to perform a method of claim 14.
